Europäisches Patentamt

European Patent Office

Office européen des brevets

(11) Publication number: **0 520 099 A1**

## EUROPEAN PATENT APPLICATION

(21) Application number: **91305681.8**

(22) Date of filing: **24.06.91**

(51) Int. Cl.5: **G06F 15/72**

(43) Date of publication of application:
**30.12.92 Bulletin 92/53**

(84) Designated Contracting States:
**CH DE FR GB LI NL**

(71) Applicant: **SHUKYOHOJIN, KONGO ZEN SOHONZAN SHORINJI**
**1-48, Hondori 3-chome, Tadotsucho**
**Nakatado-gun, Kagawa-ken(JP)**

(72) Inventor: **Kunii, Tosiyasu**
**25-21-602, Hongo-1-chome**
**Bunkyo-ku, Tokyo(JP)**
Inventor: **Sun, Lining**
**602, 1-22-13 Miyamoto**
**Funabashi, Chiba(JP)**

(74) Representative: **Stoner, Gerard Patrick et al**
**Mewburn Ellis 2 Cursitor Street**
**London EC4A 1BO(GB)**

(54) **Applied motion analysis and design.**

(57) Methods of forming a numerical control program for a machine tool, computer animation, animal training, human skill development, robot programming and sport motion development.

The methods involve constructing a human/animal body model, applying actual human/animal movements to it and analysing the input movements using inverse dynamics. Further desired movements are then calculated using dynamics on the various segments of the body independently of one another, then applying known constraints governing the actual possible motion of each segment, and then analysing the corrected motion again using inverse dynamics.

This invention relates to methods of applying a new method of analysing and designing motions which may be carried out using a computer.

Specific applied methods include methods for forming a numerical control program for a machine tool or similar device, achieving and developing a computer animation, analysing and training the motions of animals, programming a robot to imitate the motions of a human being or other animal, analysing and improving motions carried out in sports, and developing skills for use e.g. in the industrial and performing arts.

All of these aspects may usefully apply the novel methods of processing which have been developed by the present inventors. In particular, the present processes relate to applying the recorded movements of an actual human or animal to a human or animal model stored in a computer database, and analysing the applied motions using inverse dynamics to obtain force, torque and centre of gravity data for various sections of the body concerned. A proposed motion can then be entered using simple dynamic principles for each section, without complicating the process by taking into account the other constraints on each section e.g. that two parts of the same leg must in fact remain connected. After the calculation, these additional constraints can then be applied to the model and a viable motion "produced" which itself is then analysable using inverse dynamic calculation. The last steps may be repeated interactively to produce a satisfactory result which can be displayed.

Various practical aspects embodying this new method or processing image/model data are set out in the claims.

In the prior art, disclosures relating to motion design may usefully be referred to in US-A-4807108, US-A-4744026, US-A-4744027 and US-A-4744028. Reference is also made to the article "Dynamic Analysis-Based Human Animation" by the present inventors, a copy of which has been filed with this application for contemporaneous publication. The disclosure of this article is incorporated herein by reference.

Various aspects embodying the invention are now described with reference to the accompanying drawings in which:

Fig. 1 is a flow chart illustrating a general method;

Fig. 2 are control graphs, exemplifying forces exerted in the three axial directions at a body joint;

Figs. 3(a) and 3(b) are schematic views of a display obtainable using dynamics;

Figs 4(a) and 4(b) are schematic views of a display obtainable using inverse dynamics;

Figs. 5 and 6 correspond to Figs. 3 and 4, in the case of an animal movement, and

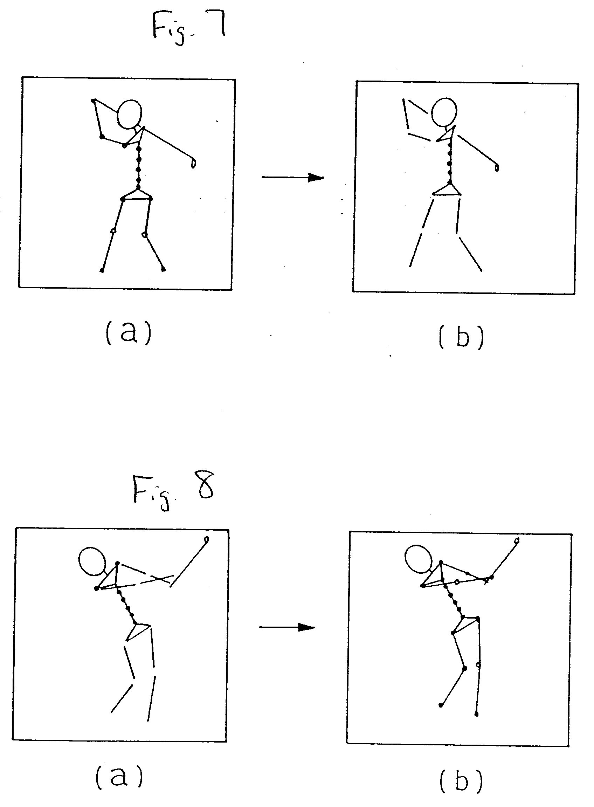

Figs. 7 and 8 are corresponding schematic displays in respect of a human sporting movement.

This aspect relates to a method for forming a numerical control program for a machine tool or similar device.

Modern machine tools are frequently controlled by numerical control programs. Recently, in numerical control techniques, systems known as CAE systems or CIM systems have been utilized. In these system, design is performed using CAD processes and production is performed using CAM processes.

Since numerical control techniques do not specify working requirements such as the direction of the working operation, the magnitude of the force to be applied to the workpiece, or the working speed, it is impossible with these techniques to achieve the same quality as can be achieved by a skilled craftsman manually controlling a machine tool.

Furthermore, while the formation of numerical control programs is preferably performed by a method having real time response, conventional numerical control programming methods have no real time response because they require the ascertainment of the contents by means of motion simulation and fine adjustment at the work site.

In order to perform high quality manufacturing by means of numerical control, it is necessary to analyze the motions of a human machine operator and form a control program on the basis of the analysis. However, in the past, since unreliable knowledge based on the intuition of the programmer was used, the resulting control program was unsatisfactory. Furthermore, since kinematics, which describes motions in terms of positions, velocities, and accelerations, was used to analyze and design motions of a machine tool, the resulting motions were apt to be incorrect. Thus, with conventional methods, it was difficult to construct a numerical control program using only a computer.

Another method referred to as dynamics provides motions of an object based on the relation between movements and forces. If dynamics is applied to the construction of a numerical control program, it is possible to program complex behavior with minimal control. Furthermore, dynamics has the great advantage that it can construct programs which could never be obtained utilizing kinematics. However, dynamics has the problem that it is necessary to know the moment of inertia, the center of gravity, joint friction, and muscle and ligament elasticity of the human body, which are difficult to measure.

Furthermore, programming methods utilizing dynamics are not suitable because of their computational complexity, since when n is the number of segments in the numerical control program, each acting as a minimal unit of motion, the computational complexity $O(f(n))$ becomes a function $O(n^4)$ of $n^4$, and thus is very large, so calculation requires a long time.

A method of forming a numerical control program having a computational complexity of $O(n)$ has been proposed. However, this method is applicable only when there are no rotations of joints about the principal axes, so it finds very limited applications.

It would be desirable to provide an method for forming a numerical control program which can develop new motions for a machine tool using knowledge obtained by dynamic analysis of the motions of a human being.

It would also be desirable to provide an improved method for forming a numerical control program by computer in an interactive manner without relying on trial and error or the intuition of the programmer.

In a method for forming a numerical control program according to the present aspect , basic motions of a human being are analyzed to obtain data on dynamic parameters including the forces and torque exerted on joint of the human body, and this data is put into a database. A programmer then accesses the database and modifies the data, and a computer provides the programmer with feedback in real time on the result of constraints in terms of constrained motions and the result of inverse dynamics in terms of forces. The programmer can design new motions in an interactive manner by repeating the above processes until satisfactory results are obtained.

The computational complexity of the method of the present invention is a function $O(n)$ of the number of segments n, so the computational complexity is much less than with conventional programming methods.

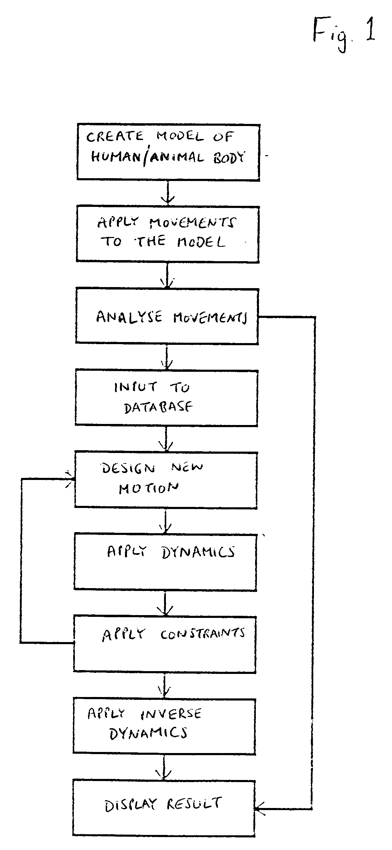

Figures 1 is a flow chart of the method.

It includes the following steps.

(1) Constructing a model of the human body;
(2) Applying the actual motions of a human to the model;
(3) Analyzing the resulting motions of the model;
(4) Designing new motions;
(5) Applying dynamics;
(6) Applying constraints;
(7) Applying inverse dynamics; and
(8) Displaying the result.

In the first step (constructing a model), the human body is divided into a plurality of segments connected by joints, each of the segments acting as a minimal unit of motion, and a model is constructed on the basis of constraints including the nature of each segment, the articulation of the body, and the range of movement of the joints connecting the segments. Data defining the model is stored in a computer as a database.

In the second step (applying actual motions), a film is taken of the actual motions of a human, and for each frame of the film, the positions of the body parts of the human are quantified and input to the computer. This data is applied to the model, and the computer calculates the position, velocity, and acceleration of each segment of the model. When the human is simultaneously filmed from a plurality of directions, the analysis in the next step can be executed more concretely.

In the third step (analyzing the motions of the model), the motions of the segments determined in the second step are analyzed using inverse dynamics to determine the center of gravity of each body segment, the force and torque exerted on each joint, the position of the center of gravity of the whole body, and the force and torque exerted on the center of gravity of the whole body. This data is then put into the database.

Next, a method for forming a numerical control program on the basis of the above analysis will be described.

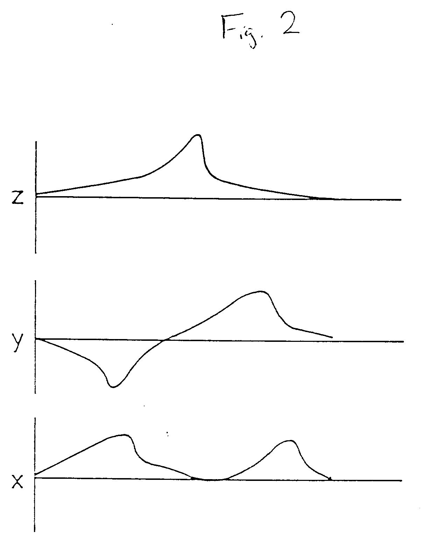

In the fourth step (designing new motions), a programmer chooses a plurality of basic motions from the database. One way of quantitatively representing the motions is by means of control graphs showing the forces acting on one of the joints of the model as a function of time. Figures 2(a) - 2(c) are control graphs of the forces acting on e.g. left elbow of a golfer in the directions of x, y, and z orthogonal axes as a function of time. The data constituting the control graphs is stored in the database. The two forces exerted on any given joint are equal in magnitude and opposite in direction. A complicated motion is represented by a plurality of graphs. The control graphs for motions of other body segments can be designed in the same manner as for the illustrated control graphs for the left elbow.

On the basis of the control graphs, a numerical control program is created. In this case, physical parameters involving scaling up or down of the abscissa or ordinate of the control graphs are modified in accordance with the dimensions and material of a workpiece and the working range of the machine tool.

In the fifth step (application of dynamics), the motion of each element of the machine tool is calculated on the basis of the forces corresponding to the basic motions selected by the developer and dynamic equations. Although the elements of the machine tool are actually connected with one another by joints, in order to simplify the calculations, it is assumed for the moment that each element is independent of the other elements.

The linear acceleration of each element is calculated using Newton's equation of motion, and the angular acceleration of each element is calculated using Euler's equations. Once the linear and angular accelerations are obtained, they are integrated a first time to find velocities and integrated a second time to find positions.

In the sixth step (application of constraints), the articulation of the machine elements and the range of the movements of the joints connecting the elements are checked for each of the motions calculated in the fifth step. The process of applying constraints starts at a element referred to as a root element, and the position and the orientation of each element in a subclass of the root element are checked sequentially. Here, two types of checks are performed. One is a check whether a subclass element is always connected to its superclass element. The other is a check whether the movement of each joint exceeds a specified range. If the subclass element is not connected to its superclass element, the subclass element is translated until it becomes connected to its superclass element. If the movement of any joint exceeds the specified range, the movement of the joint is adjusted to be within the range by rotation of the corresonding element.

In the seventh step (application of inverse dynamics), Lagrange equations which describe the relationship between forces and movement are used to calculate the forces exerted on each joint connecting the machine elements.

If the desired results are not at first obtained, the 5th - 7th steps can be repeated, and the new motions can be developed in an interactive manner.

In the eighth step (displaying the result), the new motions which have been partially or completely designed are displayed on a screen.

In the present invention, since the sequence is executed by a simple line feedback algorithm, the computational complexity of the inverse dynamics becomes a function $O(n)$ of the number of elements n.

Furthermore, the present invention makes it possible for a programmer to design a new motion of a machine tool in an interactive manner using a computer without requiring trial and error or the intuition of the programmer.

As mentioned above, the method according to the present invention comprises the steps of analyzing the basic motions of a human being and forming a new numerical control program using dynamics. The analysis of the basic motions of a human being is achieved in three steps: constructing a model, applying the actual motions of a human being to the model, and analyzing the resulting motions of the model. The formation of the program is achieved in three steps: application of dynamics, application of constraints, and application of inverse dynamics. In the step of applying dynamics, the machine tool is divided into a plurality of independent elements connected by joints, and the motion of each element is calculated independently of the other elements using Newton's equation of motion and Euler's equations. In the step of applying constraints, the articulation of the elements of the machine and the range of movement of its joints are checked. In the step of applying inverse dynamics, the force modified by the constraints and generating new forces are calculated. Thus, the whole computational complexity becomes $O(n)$.

This aspect relates to a method for developing computer animation.

Increasingly realistic and aesthetically pleasing computer animation has been achieved by taking into consideration the physical properties of the moving objects represented by the animation and the physical principles that govern the movement of the objects.

One computer animation method which was recently proposed employs kinematics, in which motions are described in terms of position, velocities, and accelerations, and forces and torques involved in the motions are ignored. However, in animation utilizing kinematics, the animator must specify the motions involved with precision, and the information necessary to do so may not be readily available to the animator.

Another recently developed animation technique utilizes dynamics, which provides the motions of an object based on the relation between motions and forces. If this method is used to create computer animation, it is possible to generate complex behavior with minimal control. Furthermore, an animation method utilizing dynamics has the great advantage that it can avoid the limitations of motion specification of methods utilizing kinematics.

However, an animation method utilizing dynamics requires data on dynamic parameters such as the moments of inertia, the centers of mass, joint friction, and muscle/ligament elasticity of the moving body being represented by the animation, and these parameters are difficult to measure. Without such data, animation based on dynamics produces unrealistic motions similar to animation based on kinematics. Furthermore, dynamics requires the solving of extensive equations. For an articulated human body with 200 degrees of freedom, 600 simultaneous differential equations need to be solved.

Thus, animation methods which have been proposed thus far are not well suited for representing complex motions.

Therefore, there is no animation method capable of representing all the motions of a human or animal.

There has been some research on the use of artificial intelligence and expert systems to capture the knowledge and skills of the animator. Other animation methods that have been suggested include a constraint-based approach and a frame-based approach.

In conventional animation methods, basic data on the motions of humans or animals, such as the dimensions of body parts, moments of inertia, and constraints that define the range of movement of individual joints is determined by the animator relying on his intuition.

Conventional animation methods utilizing dynamics to represent the movements of a human body, for example, involve the following steps.

(1) Constructing a model of the human body;
(2) Applying the actual motions of a human to the model;
(3) Analyzing the motions of the model;
(4) Creating a new motion; and
(4) Displaying the new motion on a screen.

In the fourth step (creating a new motion), a method which can exactly solve the dynamic equations using the Gibbs formula is particularly suitable. However, for an actual animation system, this method has not been used because of its complexity, since when n is the number of segments constituting the model and forming minimal units of motion, the computational complexity $O(f(n))$ becomes a function $O(n^4)$ of $n^4$, and thus is very large.

There has also been proposed an animation method which reduces the computational complexity of $O(n)$ by neglecting rotations of joints about the principal axes. However, with this method, only a line picture is possible, and a realistic three-dimensional model of an articulated body cannot be obtained.

As mentioned above, practical animation work requires a method have real time response, but conventional animation techniques require much trial and error and do not permit real time response.

It would be desirable to provide an animation developing method utilizing dynamics which enables an animator to design motions in an interactive manner based on the actual motions of a human or animal body without requiring trial and error or the intuition of an animator.

It would also be desirable to provide an animation developing method which can generate a realistic three-dimensional modeling picture.

It would furthermore be desirable to provide an animation developing method which can represent all the motions of a human or animal body.

In an animation developing method according to the present aspect, the basic movements of a human or animal body are analyzed to generate data on dynamic parameters including the forces and torques exerted on joints of the body. This data is stored in a database. In order to design a new motion, an animator accesses the database and modifies the data. A computer provides the animator with feedback on constraints in terms of constrained motions and the result of inverse dynamics in terms of forces so that the animator can design new motions in an interactive manner by repeating the above processes until satisfactory results are obtained.

The computational complexity of an animation developing method according to the present invention is reduced to a function $O(n)$ wherein n is the number of segments, so the time required for computations is greatly reduced compared to conventional methods. Furthermore, the present invention can illustrate the motions of human or animal bodies by smooth three-dimensional modeling pictures without requiring trial and error or the intuition or the animator.

Figure 1 is a flow chart of the animation developing method of the present aspect when used to develop animation of a human body. It includes the following steps.

(1) Constructing a model of the human body;
(2) Applying the actual motions of a human to the model;
(3) Analyzing the resulting motions of the model;
(4) Developing new motions from basic motions;
(5) Applying dynamics to the model;
(6) Applying constraints to the model;
(7) Applying inverse dynamics to the model; and
(8) Displaying the result.

In the first step (constructing a model), the human body is divided into a plurality or segments connected by joints, each of the segments acting as a minimal unit of motion. A model is then constructed on the basis of constraints including the nature of each segment, the articulation of the body, and the range of movement of the joints connecting the segments. Data defining the model is stored in a computer as a database.

In the second step (applying actual motions), a film is taken of the actual motions of a human, and for each frame of the film, the positions of the body parts of the human are quantified and input to the computer. This data is applied to the model, and the computer calculates the position, velocity, and acceleration of each segment of the model. When the human is simultaneously filmed from a plurality of directions, the analysis in the next step can be executed more concretely.

In the third step (analyzing the motions of the model), the motions of the segments determined in the second step are analyzed using inverse dynamics to determine the center of gravity of each body segment, the force and torque exerted on each joint, the position of the center of gravity of the whole body, and the force and torque exerted on the center of gravity of the whole body. When only the analysis of motions is desired, the center of gravity of each body segment, the force and torque exerted on each joint, the center of gravity of the whole body, and the force and torque exerted on the center of gravity of the whole body, which are obtained in the third step, are displayed on a screen by arrows or other symbols superimposed on a display of the human body model.

Next, a method for designing a new motion based on the results of the above analysis will be explained.

In order to design a new motion, the data on the human body obtained in the first step, the data on the actual motions of the human body obtained in the second step, and the data on the results of the analysis obtained in the third step are previously input to the database.

In the fourth step (designing new motions), an animator chooses a plurality of basic motions from the database. The motions are represented quantitatively by control graphs each showing the force acting on one of the joints of the model as a function of time. Figures 2(a) - 2(c) are control graphs of the forces acting in the directions of x, y, and z orthogonal axes on the left elbow of a person performing a movement in Shorinji Kempo (a martial art) as a function of time. The two forces exerted on any given joint are equal in magnitude and opposite in direction. A complicated motion is represented by a plurality of graphs. The control graphs for motions of other body segments can be designed in the same manner as for the illustrated control graphs for the left elbow.

Next, global modification and local modification of forces are performed. Global modification involves producing a uniform change in forces acting on all the body segments. Local modification involves the modification of physical parameters such as the force exerted on a specific segment of the human body.

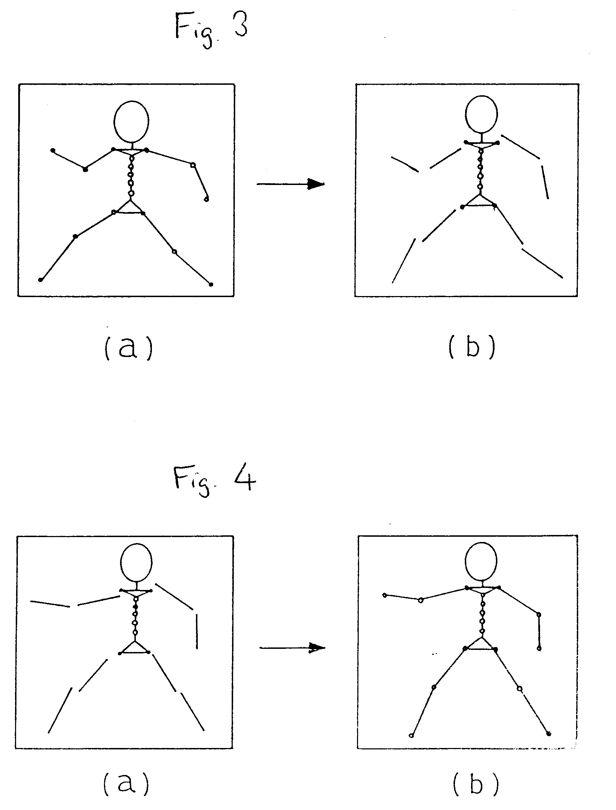

In the fifth step (application of dynamics), the motion of each body segment is calculated on the basis of the forces corresponding to the basic motions selected by the animator and the dynamic equations governing movement of the segment. In this calculation, although the articulation of the human body is essentially as shown in Figure 3(a), each body segment is treated as being separate from the others to reduce the amount of computation, and the constraints on the articulation of the human body and the range of movement of joints are neglected for the moment.

In order to calculate the motion of each segment, Newton's equation of motion is used to determine the linear acceleration of the center of gravity, and Euler's equations are used to derive the angular acceleration of each segment about its center of gravity. Once the linear and angular accelerations are obtained, they are integrated a first time to find velocities and integrated a second time to find positions.

In the sixth step (application of constraints), the articulation of the human body and the range of the movements of body joints are checked for each of the motions calculated in the fifth step. The process of applying constraints starts at a segment referred to as a root segment, and the position and the orientation of each segment in a subclass of the root segment are checked sequentially. Here, two types of checks are performed. One is a check whether a subclass segment is always connected to its superclass segment. The other is a check whether the movement of each joint exceeds a specified range. If the subclass segment is not connected to its superclass segment as shown in Figure 4(a), the subclass segment is translated until it becomes connected to its superclass segment. If the movement of each joint exceeds the specified range, the movement of the joint is adjusted to be within the range by rotation of the corresponding segment, thus modifying the positions of the segments to obtain a posture as shown in Figure 4(b).

In the seventh step (application of inverse dynamics), Lagrange equations which describe the relationship between forces and movement are used to calculate the forces exerted on each joint of the body.

If the desired results are not at first obtained, the 5th - 7th steps can be repeated, and the new motions can be developed in an interactive manner.

In the eighth step (displaying the result), the new motions which have been partially or completely designed are displayed on the screen. The position of the center of gravity of the displayed human body and the direction of forces exerted thereon can be superimposed on the human body.

In the present invention, since the sequence is executed by a simple line feedback algorithm, the computational complexity of the inverse dynamics becomes a function $O(n)$ of the number of segments n. By using inverse dynamics, a reasonable and complete combination of forces can be obtained. In contrast, without inverse dynamics, it is impossible for the animator to find the complete design of forces. In the present invention, if the orientation of a body segment is such that the range of movement of either of its joints is exceeded, the orientation of the segment is changed so that the position of the body segment satisfies the physical constraints of the human body. Since the motions of the human body thus obtained are natural motions wherein a subclass segment is always connected to its superclass segment and the movement of each joint does not exceed the specified range, such motions can be displayed realistically using a three-dimensional modeling picture.

Furthermore, according to the present invention, it is possible to develop a new motion in an interactive manner using a computer without requiring trial and error or the intuition of the animator.

Animation of an animal body can be developed by the method of the present invention in the same manner as described above with respect to a human body.

As mentioned above, the animation developing method according to the present invention comprises the steps of analyzing the basic motions of an actual human body and developing new motions. The analysis of the basic motions of the human body is achieved in three steps: constructing a model of the human body, applying the actual motions of a human to the model, and analyzing the motions of the segments of the model. The development of new motions is achieved in three steps: application of dynamics, application of constraints, and application of inverse dynamics. In the step of applying dynamics, the human body is divided into a plurality of independent body segments (50, for example) connected by joints, and the motion of each body segment is calculated independently of the other segments using Newton's equation of motion and Euler's equations. In the step of applying constraints, the articulation of the body and the range of movement of its joints are checked. In the step of applying inverse dynamics, the force modified by the constraints and generating new forces are calculated. Thus, the whole computational complexity becomes O(n).

Accordingly, the method according to the present invention can eliminate the computational complexity of conventional methods, it permits dynamics to be applied to actual animation development, and it permits feedback in real time using dynamics.

Furthermore, in order to calculate the motions of each segment of the human body, since the linear acceleration of the center of gravity is calculated using Newton's equation of motion and the angular acceleration of the center of gravity is calculated using Euler's equations, it is possible to determine and display not only the position of and the force exerted on the center of gravity of each segment, but also the position of and the force exerted on the center of gravity of the whole human body.

It is possible according to the present invention to realistically display the motions of a human body using smooth three-dimensional modeling pictures rather than line drawings. In addition, an animator can look at the human body model on the screen from various directions, and can translate or rotate various segments of the human body in an interactive manner. Thus, the animator can ascertain the relationship between the picture and the human body model correctly.

In conventional animation developing methods, basic data on the motions of the human body and the constraints that define the range of movements of individual joints is obtained using the intuition of the animator. In contrast, in the animation developing method according to the present invention, actual dynamic parameters are obtained by analyzing the actual motions of the human body. Accordingly, the motions derived from these parameters are reliable and provide realistic motions.

An object-oriented paradigm has recently been used in a number of areas. As a user interface, the object-oriented philosophy leads to a direct manipulation paradigm. In this direct manipulation paradigm, since the images displayed on a screen correspond to objects, by using the animation developing method according to the present invention, the objects can be manipulated directly in the space of the objects.

The above-described processes for analyzing motions and developing new motions according to the present invention can be applied not only to the development of animation but to programming of industrial equipment such as robot control systems, to numerical control systems, to the study of motions in sports or the performing arts, and to the training of animals.

This aspect relates to an animal training method, and more particularly to a method for analyzing the motions of an animal which is to be trained to perform a physical movement.

In order to train an animal such as a dog or horse, it is first necessary to analyze the motions of the animal. In the past, a trainer observed the motions of a skilled animal and then formed a training program on the basis of his observations. However, because observations are subjective, they may not give accurate results.

There has recently been proposed a technique wherein the motions of an animal are analyzed using a computer, and a trainer can then use the computer analysis to teach the animal a motion or develop a new motion. However, such computer analysis is not reliable because it uses data which depend upon the subject of analysis. Further, since the analysis is performed utilizing kinematics, which describes the motions in terms of positions, velocities, and accelerations, only a line picture representing the parts constituting the animal body can be displayed on a screen, and a three-dimensional model of the animal body cannot be displayed realistically. Accordingly, it is difficult both to understand the contents displayed and to develop a new motion.

Furthermore, while computer analysis of motions to develop a new motion preferably utilizes a method having real time response, the conventional methods have no real time response because they require the ascertainment of the contents of actual motions and fine adjustment based on the results.

Conventional computer notion analysis utilizing dynamics involves the following steps.

(1) Constructing a model of an animal body;
(2) Applying the actual motions of an animal to the model;
(3) Analyzing the motions of the model; and
(4) Reproducing the analyzed motions.

In the fourth step (reproducing the analyzed motions), the dynamic equations may be solved exactly. However, this method is not suitable because of its conceptual and computational complexity, since when n is the number of segments constituting the animal body model and forming the minimal units of motion in the motion analysis, the number or calculations, i.e., the computational complexity $O(f(n))$ becomes a function $O(n^4)$ of $n^4$, and thus is very large, so calculation requires a long time.

It would be desirable to provide an animal training method which enables a trainer to analyze the motions of an animal using a computer and develop a new motion in an interactive manner without requiring a process of trial and error or the intuition of the trainer.

In order to achieve the above object, according to an animal training method of the present aspect, the basic motions of an animal body are analyzed to obtain data on dynamic parameters including the forces and torques exerted on joints of the animal body, and such data are put into a database as knowledge regarding the basic motions.

In order to develop a new motion, a trainer accesses the database and modifies the data. A computer can provide the trainer with feedback in real time on the result of constraints and on the result of inverse dynamics, and new motions can be developed in an interactive manner by repeating the above processes until satisfactory results are obtained.

The computational complexity in this animal training method is a function $O(n)$ of the number of segments n in the model, so the computational complexity is greatly reduced. Furthermore, it is possible to develop new motions by computer in an interactive manner without requiring trial and error or the intuition of the trainer and to realistically display motions of the animal body using a three-dimensional smooth modeling picture.

Figures 1 is a flow chart of the method of the present aspect. It includes the following steps.

(1) Constructing an animal body model;
(2) Applying the actual motions of an animal to the model;
(3) Analyzing the resulting motions of the model;
(4) Developing new motions from basic motions;
(5) Applying dynamics to the model;
(6) Applying constraints to the model;
(7) Applying inverse dynamics to the model; and
(8) Displaying the result.

In the first step (constructing an animal body model), the animal body is divided into a plurality of segments connected by joints, each of the segments acting as a minimal unit of motion. An animal body model is then constructed on the basis of constraints including the nature of each segment, the articulation of the body, and the range of movement of the joints connecting the segments. Data defining the model are stored in a computer as a database.

In the second step (applying actual motions), a film is taken of the actual motions of an animal, and for each frame of the film, the positions of the body parts of the animal are quantified and input to the computer. This data is applied to the model, and the computer calculates the position, velocity, and acceleration of each segment of the model. When the animal is simultaneously filmed from a plurality of directions, the analysis in the next step can be executed more concretely.

In the third step (analyzing the motions of the model), the motions of the segments determined in the second step are analyzed using inverse dynamics to determine the center of gravity of each body segment, the force and torque exerted on each joint, the position of the center of gravity of the whole body, and the force and torque exerted on the center of gravity of the whole body. When only the analysis of motions is desired, the center of gravity of each body segment, the force and torque exerted on each joint, the center of gravity of the whole body, and the force and torque exerted on the center of gravity of the whole body, which are obtained in the third step, are displayed on a screen by arrows or other symbols superimposed on a display of the animal body model.

Next, a method for developing a new motion on the basis of the results of the preceding analysis will be explained.

In order to develop a new motion, the data on the animal body obtained in the first step, the data on the actual motions of the animal body obtained in the second step, and the data on the results of the analysis obtained in the third step are previously input to the database.

In the fourth step (developing new motions), a developer chooses a plurality of basic motions from the database. The basic motions are represented quantitatively by control graphs each showing the force acting on one of the joints of the model as a function of time. Figures 2(a) - 2(c) are control graphs of the forces acting on a joint in the directions of x, y, and z orthogonal axes as a function of time. The two forces exerted on any given joint are equal in magnitude and opposite in direction. A complicated motion is represented by a plurality of graphs.

Next, global modification and local modification of forces are performed. Global modification involves producing a uniform change in forces acting on all the body segments. Local modification involves the modification of physical parameters such as the force exerted on a specific segment of the animal body.

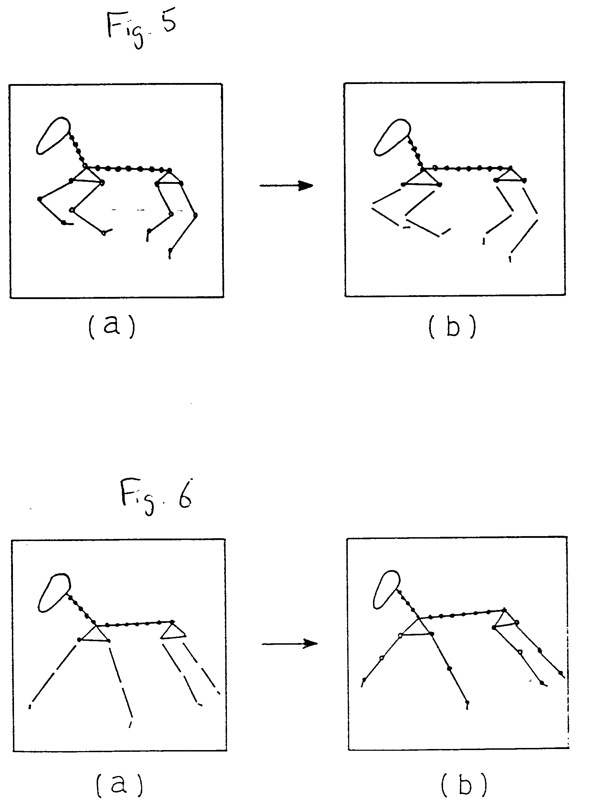

In the fifth step (application of dynamics), the motion of each body segment is calculated on the basis of the forces corresponding to the basic motions selected by the developer and the dynamic equations governing movement of the segment. In this calculation, although the articulation of the animal body is essentially as shown in Figure 5(a), each body segment is treated as being separate from the others to reduce the amount of computation, and the constraints on the articulation of the animal body and the range of movement of joints are neglected for the moment.

In order to calculate the motion of each segment, Newton's equation of motion is used to determine the linear acceleration of the center of gravity, and Euler's equations are used to derive the angular acceleration of each segment about its center of gravity. Once the linear and angular accelerations are obtained, they are integrated a first time to find velocities and integrated a second time to find positions.

In the sixth step (application of constraints), the articulation of the animal body and the range of the movements of body joints are checked for each of the motions calculated in the fifth step. The process of applying constraints starts at a segment referred to as a root segment, and the position and the orientation of each segment in a subclass of the root segment are checked sequentially. Here, two types of checks are performed. One is a check whether a subclass segment is always connected to its superclass segment. The other is a check whether the movement of each joint exceeds a specified range. If the subclass segment is not connected to its superclass segment as shown in Figure 6(a), the subclass segment is translated until it becomes connected to its superclass segment. If the movement of each segment joint exceeds the specified range, the movement of the joint is adjusted to be within the range by rotation of the corresponding segment, thus modifying the positions of the segments to obtain a posture as shown in Figure 6(b).

In the seventh step (application of inverse dynamics), Lagrange equations which describe the relationship between forces and movement are used to calculate the forces exerted on each joint of the body.

If the desired results are not at first obtained, the 5th - 7th steps can be repeated, and the new motions can be developed in an interactive manner.

In the eighth step (displaying the result), the new motions which have been partially or completely designed are displayed on the screen. The position of the center of gravity of the displayed animal body and the direction of forces exerted thereon can be superimposed on the animal body. Furthermore, in the displaying step, the results obtained in the third step in which the motions of the model are analyzed can also be displayed.

In the present invention, since the sequence is executed by a simple line feedback algorithm, the computational complexity of the inverse dynamics becomes a function O(n) of the number of segments n. By using inverse dynamics, a reasonable and complete combination of forces can be obtained. In contrast, without inverse dynamics, it is impossible for the developer to find the complete design of forces. In the present invention, if the orientation of a body segment is such that the range of movement of either of its joints is exceeded, the orientation of the segment is changed so that the position of the body segment satisfies the physical constraints of the animal body. Since the motions of the animal body thus obtained are natural motions wherein a subclass segment is always connected to its superclass segment and the movement of each joint does not exceed the specified range, such motions can be displayed realistically using a three-dimensional modeling picture.

Furthermore, according to the present invention, it is possible to develop a new motion in an interactive manner using a computer without requiring trial and error or the intuition of the developer.

As mentioned above, the animal training method according to the present invention comprises the steps of analyzing the basic motions of an actual animal body and developing new motions. The analysis of the basic motions of the animal body is achieved in three steps: constructing an animal body model, applying the actual motions of an animal to the model, and analyzing the motions of the segments of the model. The development of new motions is achieved in three steps: application of dynamics, application of constraints, and application of inverse dynamics. In the step of applying dynamics, the animal body is divided into a plurality of independent body segments (50, for example) connected by joints, and the motion of each body segment is calculated independently of the other segments using Newton's equation of motion and Euler's equations. In the step of applying the constraints, the articulation of the body and the range of movement of the joints are checked. In the step of applying inverse dynamics, the force modified by the constraints and generating new forces are calculated. Thus, the whole computational complexity becomes O(n).

Accordingly, the method according to the present invention can eliminate the computational complexity of conventional methods, it permits dynamics to be applied to actual animal training, and it permits feedback in real time using dynamics.

Furthermore, in order to calculate the motions of each segment of the animal body, since the linear acceleration of the center of gravity is calculated using Newton's equation of motion and the angular acceleration of the center of gravity is calculated using Euler's equations, it is possible to determine and display not only the position of and the force exerted on the center of gravity of each segment, but also the position of and the force exerted on the center of gravity of the whole animal body. In other words, since the position of the center of gravity of the animal body and the direction and magnitude of the forces involved in the movement can be displayed, it is possible to easily train the animal.

It is possible according to the present invention to realistically display the motions of an animal body using smooth three-dimensional modeling pictures rather than line drawings. In addition, a trainer can look at the animal body model on the screen from various directions, and can translate or rotate various segments of the animal body in an interactive manner. Thus, the analyst can ascertain the relationship between the picture and the animal body model correctly.

In conventional animal training methods, basic data on the motions of the animal body and the constraints that define the range of movements of individual joints are obtained using the intuition of the analyst. In contrast, in the animal training method according to the present invention, actual dynamic parameters are obtained by analyzing the actual motions of the animal body. Accordingly, the motions derived from these parameters are reliable and provide realistic motions.

This aspect relates to a method for programming a robot to imitate the motions of a human being or animal under the control of a computer.

Recently, industrial robots have come to be used in various fields to perform a wide variety of physical motions. Programming a robot involves a process known as teaching. One teaching method is an on-line programming method known a "teaching playback" in which the motions of a human are directly taught to the robot. Another method is an off-line programming method in which the motions of a human being are simulated by a computer.

In the teaching playback method, a person moves a robot in accordance with a working sequence by manual control. This method is widely adopted because it is easy to perform, but it has the disadvantage that the operation of the robot must be stopped during the teaching process, thereby lowering the working efficiency of the robot. The off-line programming method is useful when a high working efficiency is required, because the programming can be performed without stopping the operation of the robot.

Generally, in the off-line programming method, the contents of tracks and movement scheduled by environmental models are described by a robot programming language. the contents are ascertained by motion simulation, and fine adjustment of the contents is later performed at the work site. Thus, the off-line programming method is very complicated. Since the environmental models include geometrical information such as configurations, dimensions, positions, and postures of the work piece and peripheral equipment, physical parameters such as materials and weights, and technical information such as functions, service, and usage, a programmer must schedule the working sequence by using such complex environmental models.

In order to control a robot to perform the motions of a human being, it is necessary to analyze the motions of a human being and then design motions to be performed by the robot. In the past, since inaccurate knowledge based on the intuition of the motion analyst was used to design robot motions, the resulting motions of the robot were unsatisfactory. Furthermore, since kinematics, which describes motions in terms of positions, velocities, and accelerations, was used to analyze and design motions, the design process was very difficult.

In addition, while it is desirable to design the motions of a robot using a method have real time response, conventional off-line programming methods have no real time response because they require the ascertainment of the contents of motions by means of motion simulation and fine adjustment at the work site, which requires trial and error.

Another method known as dynamics is also applied to robot programming. Dynamics provides the motions of an object based on the relation between movement and forces. If dynamics is applied to robot programming, it is possible to program complex behavior with minimal control. Furthermore, robot programming utilizing dynamics can design new motions which can never be obtained using kinematics.

The disadvantages of dynamics have been mentioned.

A robot programming method having a computational complexity of O(n) has been proposed. However, this method is applicable only when there are no rotations of joints about the principal axes.

It would be desirable to provide an improved robot programming method utilizing dynamics which can program complicated working sequences.

It would also be desirable to provide an improved robot programming method which can produce new motions of a robot using knowledge based on analysis using dynamics of actual motions of the human body.

Furthermore it would be desirable to provide a robot programming method which enables a programmer to develop a new motion in an interactive manner without relying on trial and error or the intuition of the programmer.

In a robot programming method according to the present invention, basic motions of a human being are analyzed to obtain data on dynamic parameters including the forces and torque exerted on joints of the human body, and this data is put into a database. A programmer then accesses the database and modifies the data, and a computer provides the programmer with feedback in real time on the result of constraints in terms of constrained motions and the result of inverse dynamics in terms of forces. The programmer can design new motions in an interactive manner by repeating the above processes until satisfactory results are obtained.

The computational complexity of the motion analyzing method employed in the present invention is a function O(n) of the number of segments n, so the computational complexity is much less than with conventional programming methods. Furthermore, the present method can produce natural motions of a robot.

Figures 1 is a flow chart of the method of the present aspect. It includes the following steps.

(1) Constructing a model of the human body;
(2) Applying the actual motions of a human to the model;
(3) Analyzing the resulting motions of the model;
(4) Designing new motions;
(5) Applying dynamics;
(6) Applying constraints;
(7) Applying inverse dynamics; and
(8) Displaying the result.

In the first step (constructing a model), the human body is divided into a plurality of segments connected by joints, each of the segments acting as a minimal unit of motion. A model is then constructed on the basis of constraints including the nature of each segment, the articulation of the body, and the range of movement of the joints connecting the segments. Data defining the model is stored in a computer as a database.

In the second step (applying actual motions), a film is taken of the actual motions of a human, and for each frame of the film, the positions of the body parts of the human are quantified and input to the computer. This data is applied to the model, and the computer calculates the position, velocity, and acceleration of each segment of the model. When the human is simultaneously filmed from a plurality of directions, the analysis in the next step can be executed more concretely.

In the third step (analyzing the motions of the model), the motions of the segments determined in the second step are analyzed using inverse dynamics to determine the center of gravity of each body segment, the force and torque exerted on each joint, the position of the center of gravity of the whole body, and the force and torque exerted on the center of gravity of the whole body. This data is then put into the database.

Next, a method for programming a robot to perform a new motion on the based on the results of the preceding analysis will be described.

In the fourth step (designing new motions), a programmer chooses a plurality of basic motions from the database. One way of quantitatively representing the motions is by means of control graphs showing the forces acting on one of the joints of the model as a function of time. Figures 2(a) - 2(c) are control graphs of the forces acting on the left elbow of a golfer in the directions of x, y, and z orthogonal axes as a function of time. The data constituting the control graphs is stored in the database. The two forces exerted on any given joint are equal in magnitude and opposite in direction. A complicated motion is represented by a plurality of graphs. The control graphs for motions of other body segments can be designed in the same manner as for the illustrated control graphs for the left elbow.

On the basis of the control graphs, a program for a robot is created. In this case, physical parameters involving scaling up or down of the abscissa or ordinate of the control graphs are modified in accordance with the dimensions and material of a work piece to be handled by the rotor and the working range of the robot.

In the fifth step (application of dynamics), the motion of each segment of the robot is calculated on the basis of the forces corresponding to the basic motions selected by the developer and the dynamic equations governing movement of the segment. Although the segments of the robot body are in fact connected with one another by joints, in order to simplify the calculations, it is assumed for the moment that each segment of the robot is independent of the other segments.

The linear acceleration of each segment is calculated using Newton's equation of motion, and the angular acceleration of each segment is calculated using Euler's equations. Once the linear and angular accelerations are obtained, they are integrated a first time to find velocities and integrated a second time to find positions.

In the sixth step (application of constraints), the articulation of the segments of the robot and the range of the movements of its joints are checked for each of the motions calculated in the fifth step. The process of applying constraints starts at a segment referred to as a root segment, and the position and the orientation of each segment in a subclass of the root segment are checked sequentially. Here, two types of checks are performed. One is a check whether a subclass segment is always connected to its superclass segment. The other is a check whether the movement of each joint exceeds a specified range. If the subclass segment is not connected to its superclass segment as shown in Figure 4(a), the subclass segment is translated until it becomes connected to its superclass segment. If the movement of each segment joint exceeds the specified range, the movement of the joint is adjusted to be within the range by rotation.

In the seventh step (application of inverse dynamics), Lagrange equations which describe the relationship between forces and movement are used to calculate the forces exerted on each joint of the robot body.

If the desired results are not at first obtained, the 5th - 7th steps can be repeated, and the new motions can be developed in an interactive manner.

In the eighth step (displaying the result), the new motions which have been partially or completely designed are displayed on the screen.

In the present invention, since the sequence is executed by a simple line feedback algorithm, the computational complexity of the inverse dynamics becomes a function $O(n)$ of the number of segments n.

Furthermore, the present invention makes it possible for a programmer to design a new motion of a robot in an interactive manner using a computer without requiring trial and error or the intuition of the programmer.

As mentioned above, the robot programming method according to the present invention comprises the steps of analyzing the basic motions of a human being and forming a new robot program using dynamics. The analysis of the basic motions of a human being is achieved in three steps: constructing a model, applying the actual motions of a human being to the model, and analyzing the resulting motions of the model. The formation of the program is achieved in three steps: application of dynamics, application of constraints, and application of inverse dynamics. In the step of applying dynamics, the robot body is divided into a plurality of independent segments connected by joints, and the motion of each segment is calculated independently of the other segments using Newton's equation of motion and Euler's equations. In the step of applying constraints, the articulation of the robot body and the range of movement of the joints are checked. In the step of applying inverse dynamics, the forces modified by the constraints and generating new forces are calculated. Thus, the whole computational complexity becomes $O(n)$.

This aspect relates to a method for analyzing a physical motion used in performing a sport (hereinafter referred to as a sport motion) in order to develop a curriculum for teaching the motion.

In order to teach a sport motion, it is first necessary to analyze the motion. In the past, a trained analyst observed the motions of a skilled athlete and then formed a curricular for learning the motion based on his observations. However, because the observations are subjective, they may unreliable. Furthermore, since the development of a new sport motion is performed by trial and error, it can be very time consuming.

There has recently been proposed a technique wherein a motion of an athlete is analyzed using a computer, and a trainer can then use the computer analysis to train an unskilled person to perform the motion. The computer analysis can also be used to develop a new motion. The computer analysis utilizes kinematics, which describes the motions in terms of positions, velocities, and accelerations using data which depends upon the subject of analysis. Therefore, only a line picture of the human body can be displayed on a screen, and a three-dimensional model of the human body cannot be displayed realistically. Accordingly, it is difficult to understand the display and to develop a new motion.

Furthermore, while computer analysis of motions to develop a new motion preferably utilizes a method having real time response, conventional computer analysis methods have no real time response because they require the ascertainment of the contents of actual motions and fine adjustment based on the results.

Another method referred to as dynamics provides the motions of an object based on the relation between movements and forces. The disadvantages have been described above.

It would be desirable to provide a sport motion developing method which can analyze the motions of a human using a computer and develop a new sport motion in an interactive manner without requiring trial and error or the intuition of an analyst.

In order to achieve the above object, according to a sport motion developing method of the present aspect, the basic motions of a human body are analyzed to obtain data on dynamic parameters including the forces and torques exerted on joints of the human body and such data are put into a database as knowledge regarding the basic motions.

In order to develop a new motion, a trainer accesses the database and modifies the data. A computer can provide the trainer with feedback in real time on the result of constraints and on the result of inverse dynamics, and new motions can be developed in an interactive manner by repeating the above processes until satisfactory results are obtained.

The computational complexity in this sport motion developing method is a function O(n) of the number of segments n in the model, so the computational complexity is greatly reduced. Furthermore, the present invention allows a trainer to develop a new motion by computer in an interactive manner without requiring trial and error or his intuition, and motions of the human body can be realistically displayed using a three-dimensional smooth modeling picture.

Figures 1 is a flow chart of the method of the present aspect. It includes the following steps.

(1) Constructing a model of the human body;
(2) Applying the actual motions of a human to the model;
(3) Analyzing the resulting motions of the model;
(4) Developing new motions from basic motions;
(5) Applying dynamics to the model;
(6) Applying constraints to the model;
(7) Applying inverse dynamics to the model; and
(8) Displaying the result.

In the first step (constructing a model), the human body is divided into a plurality of segments connected by joints, each of the segments acting as a minimal unit of motion. A model is then constructed on the basis of constraints including the nature of each segment, the articulation of the body, and the range of movement of the joints connecting the segments. Data defining the model are stored in a computer as a database.

In the second step (applying actual motions), a film is taken of the motions of an actual human, and for each frame of the film, the positions of the body parts of the human are quantified and input to the computer. This data is applied to the model, and the computer calculates the position, velocity, and acceleration of each segment of the model. When the human is simultaneously filmed from a plurality of directions, the analysis in the next step can be executed more concretely.

In the third step (analyzing the motions of the model), the motions of the segments determined in the second step are analyzed using inverse dynamics to determine the center of gravity of each body segment, the force and torque exerted on each joint, the position of the center of gravity of the whole body, and the force and torque exerted on the center of gravity of the whole body. When only the analysis of motions is desired, the center of gravity of each body segment, the force and torque exerted on each joint, the center of gravity of the whole body, and the force and torque exerted on the center of gravity of the whole body, which are obtained in the third step, are displayed on a screen by arrows or other symbols superimposed on a display of the human body model.

Next, a method for developing a new motion on the basis of the results of the preceding analysis will be explained.

In order to develop a new motion, the data on the human body model obtained in the first step, the data on the actual motions of the human body obtained in the second step, and the data on the results of the analysis obtained in the third step are previously input to the database.

In the fourth step (developing new motions), a developer chooses a plurality of basic motions from the database. The basic motions are represented quantitatively by control graphs each showing the force acting on one of the joints of the model as a function of time. Figures 2(a) - 2(c) are control graphs of the forces acting on the left elbow of e.g. a golfer in the directions of x, y, and z orthogonal axes as a function of time. The two forces exerted on any given joint are equal in magnitude and opposite in direction. A complicated motion is represented by a plurality of graphs. The control graphs for motions of other body segments can be designed in the same manner as for the illustrated control graphs for the left elbow.

Next, global modification and local modification of forces are performed. Global modification involves producing a uniform change in forces acting on all the body segments. Local modification involves the modification of physical parameters such as the force exerted on a specific segment of the human body.

In the fifth step (application of dynamics), the motion of each body segment is calculated on the basis of the forces corresponding to the basic motions selected by the developer and the dynamics equations governing movement of the segment. In this calculation, although the articulation of the human body is essentially as shown in Figure 3(a), each body segment is treated as being separate from the others to reduce the amount of computation, and the constraints on the articulation of the human body and the range of movement of joints are neglected for the moment.

In order to calculate the motion of each segment, Newton's equation of motion is used to determine the linear acceleration of the center of gravity, and Euler's equations are used to derive the angular acceleration of each segment about its center of gravity. Once the linear and angular accelerations are obtained, they are integrated a first time to find velocities and integrated a second time to find positions.

In the sixth step (application of constraints), the articulation of the human body and the range of the movements of body joints are checked for each of the motions calculated in the fifth step. The process of applying constraints starts at a segment referred to as a root segment, and the position and the orientation of each segment in a subclass of the root segment are checked sequentially. Here, two types of checks are performed. One is a check whether a subclass segment is always connected to its superclass segment. The other is a check whether the movement of each joint exceeds a specified range. If the subclass segment is not connected to its superclass segment as shown in Figure 8(a), the subclass segment is translated until it becomes connected to its superclass segment. If the movement of each segment joint exceeds the specified range, the movement of the joint is adjusted to be within the range by rotation, thus modifying the positions of the segments to obtain a posture as shown in Figure 8(b).

In the seventh step (application of inverse dynamics), Lagrange equations which describe the relationship between forces and movement are used to calculate the forces exerted on each joint of the body.

If the desired results are not at first obtained, the 5th - 7th steps can be repeated, and the new motions can be developed in an interactive manner.

In the eighth step (displaying the result), the new motions which have been partially or completely designed are displayed on the screen. The position of the center of gravity of the human body and the direction of forces exerted thereon can be superimposed on the display of the human body. Furthermore, in the displaying step, the results obtained in the third step in which the motions of the model are analyzed can also be displayed.

In the present invention, since the sequence is executed by a simple line feedback algorithm, the computational complexity of the inverse dynamics becomes a function $O(n)$ of the number of segments n. By using inverse dynamics, a reasonable and complete combination of forces can be obtained. In contrast, without inverse dynamics, it is impossible for the developer to find the complete design of forces. In the present invention, if the orientation of a body segment is such that the range of movement of either of its joints is exceeded, the orientation of the segment is changed so that the position of the body segment satisfies the physical constraints of the human body. Since the motions of the human body thus obtained are natural motions wherein a subclass segment is always connected to its superclass segment and the movement of each joint does not exceed the specified range, such motions can be displayed realistically using a three-dimensional modeling picture.

Furthermore, according to the present invention, it is possible to develop a new motion in an interactive manner using a computer without requiring trial and error or the intuition of the developer.

As mentioned above, the sport motion developing method according to the present invention comprises the steps of analyzing the basic motions of an actual human body and developing new motions. The analysis of the basic motions of the human body is achieved in three steps: constructing a human body model, applying the actual motions of a human to the model, and analyzing the motions of the segments of the model. The development of new motions is achieved in three steps: application of dynamics, application of constraints, and application of inverse dynamics. In the step of applying dynamics, the human body is divided into a plurality of independent body segments (50, for example) connected by joints, and the motion of each body segment is calculated independently of the other segments using Newton's equation of motion and Euler's equations. In the step of applying the constraints, the articulation of the body and the range of movement of the joints are checked. In the step of applying inverse dynamics, the force modified by the constraints and generating new forces are calculated. Thus, the whole computational complexity becomes $O(n)$.

Accordingly, the method according to the present invention can eliminate the computational complexity of conventional methods, it permits dynamics to be applied to actual sport motion development, and it permits feedback in real time using dynamics.

Furthermore, in order to calculate the motions of each segment of the human body, since the linear acceleration of the center of gravity is calculated using Newton's equation of motion and the angular acceleration of the center of gravity is calculated using Euler's equations, it is possible to determine and display not only the position of and the force exerted on the center of gravity of each segment, but also the position of and the force exerted on the center of gravity of the whole human body. In other words, since the position of the center of gravity of the human body and the direction and magnitude of the forces involved in the movement can be displayed, it is possible to easily teach the motion being developed.

It is possible according to the present invention to realistically display the motions of a human body using smooth three-dimensional modeling pictures rather than line drawings. In addition, a trainer can look at the human body model on the screen from various directions, and can translate or rotate various segments of the human body in an interactive manner. Thus, the analyst can ascertain the relationship between the picture and the human body model correctly.

In conventional sport motion developing methods, basic data on the motions of the human body and the constraints that define the range of movements of individual joints are obtained using the intuition of the analyst. In contrast, in the sport motion developing method according to the present invention, actual dynamic parameters are obtained by analyzing the actual motions of the human body. Accordingly, the motions derived from these parameters are reliable and provide realistic motions.

This aspect relates to a skill developing method for analyzing various skills in the industrial and performing arts and forming curricula for teaching the skills.

In order to teach new skills in the industrial and performing arts, it is necessary to analyze the motions involved in the skill and then form curricula for teaching the motions. In the past, an analyst observed the technique of an expert in the skill to be taught and then formed a teaching curriculum on the basis of his observations. However, because observations are subjective, the results may not be reliable.

There has recently been proposed a method wherein a skill is analyzed using a computer, and a teacher can then use the computer analysis to train an unskilled person to perform the skill. The computer analysis utilizes kinematics, of which the disadvantages have been described above.

Furthermore, while computer analysis of motions for developing a new skill preferably utilizes a method having real time response, conventional computer analysis methods have no real time response because they require the ascertainment of the contents of actual motions and fine adjustment based on the results.

Another method referred to as dynamics provides the motions of an object based on the relation between movements and forces. The disadvantages and complexities thereof have been mentioned.

It would be desirable to provide a skill developing method which can analyze the motions of a human using a computer and develop a new skill in an interactive manner without requiring trial and error or the intuition of an analyst.

In order to achieve the above object, in a skill developing method of the present invention, the basic motions of a human body are analyzed to obtain data on dynamic parameters including the forces and torques exerted on joints of the human body, and such data are put into a database as knowledge regarding the basic motions.

In order to develop a new skill, an analyst accesses the database and modifies the data. A computer can provide the analyst with feedback in real time on the result of constraints and on the result of inverse dynamics, and new skills can be developed in an interactive manner by repeating the above processes until satisfactory results are obtained.

The computational complexity in this skill developing method is a function O(n) of the number of segments n in the model, so the computational complexity is greatly reduced. Furthermore, it is possible to describe realistic motions of the human body using a three-dimensional smooth modeling picture.

Figure 1 is a flow chart of the method of the present aspect. It includes the following steps.

(1) Constructing a model of the human body;
(2) Applying the actual motions of a human to the model;
(3) Analyzing the resulting motions of the model;
(4) Developing new motions from basic motions;
(5) Applying dynamics to the model;
(6) Applying constraints to the model;
(7) Applying inverse dynamics to the model; and
(8) Displaying the result.

In the first step (constructing a model), the human body is divided into a plurality of segments connected by joints, each of the segments acting as a minimal unit of motion. A model then is constructed on the basis of constraints including the nature of each segment, the articulation of the body, and the range of movement of the joints connecting the segments. Data defining the model are stored in a computer as a database.

In the second step (applying actual motions), a film is taken of the actual motions of a human, and for each frame of the film, the positions of the body parts of the human are quantified and input to the computer. This data is applied to the model, and the computer calculates the position, velocity, and acceleration of each segment of the model. When the human is simultaneously filmed from a plurality of directions, the analysis in the next step can be executed more concretely.

In the third step (analyzing the motions of the model), the motions of the segments determined in the second step are analyzed using inverse dynamics to determine the center of gravity of each body segment, the force and torque exerted on each joint, the position of the center of gravity of the whole body, and the force and torque exerted on the center of gravity of the whole body. When only the analysis of motions is desired, the center of gravity of each body segment, the force and torque exerted on each joint, the center of gravity of the whole body, and the force and torque exerted on the center of gravity of the whole body, which are obtained in the third step, are displayed on a screen by arrows or other symbols superimposed on a display of the human body model.

Next, a method for developing a new skill on the basis of the results of the preceding analysis will be explained.

In order to develop a new skill, the data on the human body obtained in the first step, the data on the actual motions of the human body obtained in the second step, and the data on the results of the analysis obtained in the third step are previously input to the database.

In the fourth step (developing new skills), an analyst chooses a plurality of basic motions from the database. The basic motions are represented quantitatively by control graphs each showing the force acting on one of the joints of the model as a function of time. Figures 2(a) - 2(c) are control graphs of the forces acting on the left elbow in the directions of x, y, and z orthogonal axes as a function of time. The two forces exerted on any given joint are equal in magnitude and opposite in direction. A complicated motion is represented by a plurality of graphs. The control graphs for motions of other body segments can be designed in the same manner as for the illustrated control graphs for the left elbow.

Next, global modification and local modification of forces are performed. Global modification involves producing a uniform change in forces acting on all the body segments. Local modification involves the modification of physical parameters such as the force exerted on a specific segment of the human body.

In the fifth step (application of dynamics), the motion of each body segment is calculated on the basis of the forces corresponding to the basic motions selected by the analyst and the dynamic equations governing movement of the segments. In this calculation, although the articulation of the human body is essentially as shown in Figure 3(a), each body segment is treated as being separate from the others to reduce the amount of computation, and the constraints on the articulation of the human body and the range of movement of joints are neglected for the moment.

In order to calculate the motion of each segment, Newton's equation of motion is used to determine the linear acceleration of the center of gravity, and Euler's equations are used to derive the angular acceleration of each segment about its center of gravity. Once the linear and angular accelerations are obtained, they are integrated a first time to find velocities and integrated a second time to find positions.

In the sixth step (application of constraints), the articulation of the human body and the range of the movements of body joints are checked for each of the motions calculated in the fifth step. The process of applying constraints starts at a segment referred to as a root segment, and the position and the orientation of each segment in a subclass of the root segment are checked sequentially. Here, two types of checks are performed. One is a check whether a subclass segment is always connected to its superclass segment. The other is a check whether the movement of each joint exceeds a specified range. If the subclass segment is not connected to its superclass segment as shown in Figure 4(a), the subclass segment is translated until it becomes connected to its superclass segment. If the movement of each segment joint exceeds the specified range, the movement of the joint is adjusted to be within the range by rotation of the corresponding segment, thus modifying the positions of the segments to obtain a posture as shown in Figure 4(b).

In the seventh step (application of inverse dynamics), Lagrange equations which describe the relationship between forces and movement are used to calculate the forces exerted on each joint of the body.

If the desired results are not at first obtained, the 5th - 7th steps can be repeated, and the new motions can be developed in an interactive manner.

In the eighth step (displaying the result), the new motions which have been partially or completely designed are displayed on the screen. The position of the center of gravity of the human body and the direction of forces exerted thereon can be superimposed on the display of the human body. Furthermore, in the displaying step, the results obtained in the third step in which the motions of the model are analyzed can also be displayed.

In the present invention, since the sequence is executed by a simple line feedback algorithm, the computational complexity of the inverse dynamics becomes a function O(n) of the number of segments n. By using inverse dynamics, a reasonable and complete combination of forces can be obtained. In contrast, without inverse dynamics, it is impossible for the analyst to find the complete design of forces. In the present invention, if the orientation of a body segment is such that the range of movement of either of its joints is exceeded, the orientation of the segment is changed so that the position of the body segment satisfies the physical constraints of the human body. Since the motions of the human body thus obtained are natural motions wherein a subclass segment is always connected to its superclass segment and the movement of each joint does not exceed its specified range, such motions can be displayed realistically using a three-dimensional modeling picture.

Furthermore, according to the present invention, it is possible to develop a new motion in an interactive manner using a computer without requiring trial and error or the intuition of the analyst.

As mentioned above, the skill developing method according to the present invention comprises the steps of analyzing the basic motions of an actual human body and developing new motions. The analysis of the basic motions of the human body is achieved in three steps: constructing a human body model, applying the actual motions of a human to the model, and analyzing the motions of the segments of the model. The development of new motions is achieved in three steps: application of dynamics, application of constraints, and application of inverse dynamics. In the step of applying dynamics, the human body is divided into a plurality of independent body segments (50, for example) connected by joints, and the motion of each body segment is calculated independently of the other segments using Newton's equation of motion and Euler's equations. In the step of applying constraints, the articulation of the body and the range of movement of the joints are checked. In the step of applying inverse dynamics, the force modified by the constraints and generating new forces are calculated. Thus, the whole computational complexity becomes O(n).

Accordingly, the skill developing method according to the present invention can eliminate the computational complexity of conventional methods, it permits dynamics to be applied to actual skill development, and it permits feedback in real time using dynamics.

Furthermore, in order to calculate the motions of each segment of the human body, since the linear acceleration of the center of gravity is calculated using Newton's equation of motion and the angular acceleration of the center of gravity is calculated using Euler's equations, it is possible to determine and display not only the position of and the force exerted on the center of gravity of each segment, but also the position of and the force exerted on the center of gravity of the whole human body. In other words, since the position of the center of gravity of the human body and the direction and magnitude of the forces involved in the movement can be displayed, it is possible to easily teach the skill being developed.

It is possible according to the present invention to realistically display the motions of a human body using smooth three-dimensional modeling pictures rather than line drawings. In addition, an analyst can look at the human body model on the screen from various directions, and can translate or rotate various segments of the human body in an interactive manner. Thus, the analyst can ascertain the relationship between the picture and the human body model correctly.

In conventional skill developing methods, basic data on the motions of the human body and the constraints that define the range of movements of individual joints are obtained using the intuition of the analyst. In contrast, in the skill developing method according to the present invention, actual dynamic parameters are obtained by analyzing the actual motions of the human body. Accordingly, the motions derived from these parameters are reliable and provide realistic motions.

## Claims

1. A method of forming a numerical control program on the basis of the motions of a human, comprising:

   dividing a human body into a plurality of segments connected by joints, each of the segments acting as a minimal unit of motion, constructing a model from the segments based on constraints including the inherent future of each segment and the articulation of the body and range of movement of each joint, and inputting the model into a database;

   applying actual motions of a human to the model;

   calculating the resulting motions of the model by inverse dynamics and calculating the center of gravity of each segment, the force and torque exerted on each joint, the center of gravity of the whole body, and the force and torque exerted on the center of gravity of the whole body;

   choosing a plurality of basic motions from the database and modifying physical parameters of the basic motions;

   calculating the motions of each segment when forces corresponding to the basic motions are applied to the segments using dynamics while neglecting constraints on the articulation of the human body and the range of movements of the joints;

   checking and modifying the physical constraints on the articulation of the animal body and the range of movements of the joints; and

   displaying the resulting motions on a screen.

2. A method of forming a numerical control program on the basis of the motions of a human, comprising:

dividing a human body into a plurality of segments connected by joints, each of the segments acting as a minimal unit of motion, constructing a model from the segments based on constraints including the inherent future of each segment and the articulation of the body and range of movement of each joint, and inputting the model into a database;

applying actual motions of a human to the model;

calculating the resulting motions of the model by inverse dynamics and calculating the center of gravity of each segment, the force and torque exerted on each joint, the center of gravity of the whole body, and the force and torque exerted on the center of gravity of the whole body;

choosing a plurality of basic motions from the database and modifying physical parameters of the basic motions;

calculating the motions of each segment when forces corresponding to the basic motions are applied to the segments using dynamics while neglecting constraints on the articulation of the human body and the range of movements of the joints;

checking and modifying the physical constraints on the articulation of the animal body and the range of movements of the joints;

calculating the relation between forces and motions caused by the modification of physical constraints using inverse dynamics; and

displaying the result obtained by composing the motions calculated by dynamics and the forces and centers of gravity calculated by inverse dynamics.

3. A method for developing a new computer animation comprising:

dividing a moving body into a plurality of segments connected by joints, each of the segments acting as a minimal unit of motion, constructing a model of the moving body on the basis of constraints including the inherent future of each segment, the articulation of the body, and the range of the movement of each joint, and inputting the model into a database;

applying the actual motions of a moving body to the model;

calculating the resulting motions of the model using inverse dynamics and calculating the center of gravity of each segment, the force and torque exerted on each joint, the center of gravity of the whole body, and the force and torque exerted on the center of gravity of the whole body;

choosing a plurality of basic motions from the database, and modifying physical parameters of the basic motions;

calculating the motions of each segment when forces corresponding to the basic motions are applied to the segments using dynamics while neglecting constraints on the articulation of the moving body and the range of movements of the joints;

checking and modifying the physical constraints on the articulation of the moving body and the range of movements of the joints; and

displaying the resulting motions of the model on a screen.

4. A method for developing computer animation comprising:

dividing a moving body into a plurality of segments connected by joints, each of the segments acting as a minimal unit of motion, constructing a model of the moving body on the basis of constraints including the inherent future of each segment, the articulation of the body, and the range of the movement of each joint, and inputting the model into a database;

applying actual motions of a moving body to the model;

calculating the resulting motions of the model using inverse dynamics and calculating the center of gravity of each segment, the force and torque exerted on each joint, the center of gravity of the whole body, and the force and torque exerted on the center of gravity of the whole body;

choosing a plurality of basic motions from the database, and modifying physical parameters of the basic motions;

calculating the motions of each segment when forces corresponding to the basic motions are applied to the segments using dynamics while neglecting constraints on the articulation of the moving body and the range of movements of the joints;

checking and modifying physical constraints on the articulation of the moving body and the range of movements of the joints;

calculating the relation between forces and the motions caused by the modification of physical constraints using inverse dynamics; and

displaying the result obtained by composing the motions calculated by dynamics and the forces and centers of gravity calculated by inverse dynamics.

5. A method for developing a new training motion for training an animal, comprising:

dividing an animal body into a plurality of segments connected by joints, each of the segments acting as a minimal unit of motion, constructing an animal body model on the basis of constraints including the inherent future of each segment, the articulation of the body, and the range of the movement of each joint, and inputting the animal body model into a database;

applying the actual motions of an animal body to the model;

calculating the resulting motions of the model using inverse dynamics and calculating the center of gravity of each segment, the force and torque exerted on each joint, the center of gravity of the whole body, and the force and torque exerted on the center of gravity of the whole body;

choosing a plurality of basic motions from the database, and modifying physical parameters of the basic motions;

calculating the motions of each segment when forces corresponding to the basic motions are applied to the segments using dynamics while neglecting constraints on the articulation of the animal body and the range of movements of the joints;

checking and modifying the physical constraints on the articulation of the animal body and the range of movements of the joints; and

displaying the resulting motions of the animal model on a screen.

6. A method for developing a new training motion comprising:

dividing an animal body into a plurality of segments connected by joints, each of the segments acting as a minimal unit of motion, constructing an animal body model on the basis of constraints including the inherent future of each segment, the articulation of the body, and the range of the movement of each joint, and inputting the animal body model into a database;

applying actual motions of an animal body to the model;

calculating the resulting motions of the model using inverse dynamics and calculating the center of gravity of each segment, the force and torque exerted on each joint, the center of gravity of the whole body, and the force and torque exerted on the center of gravity of the whole body;

choosing a plurality of basic motions from the database, and modifying physical parameters of the basic motions;

calculating the motions of each segment when forces corresponding to the basic motions are applied to the segments using dynamics while neglecting constraints on the articulation of the animal body and the range of movements of the joints;

checking and modifying physical constraints on the articulation of the animal body and the range of movements of the joints;

calculating the relation between forces and the motions caused by the modification of physical constraints using inverse dynamics; and

displaying the result obtained by composing the motions calculated by dynamics and the forces and centers of gravity calculated by inverse dynamics

7. A robot programming method comprising:

dividing a human body into a plurality of segments connected by joints, each of the segments acting as a minimal unit of motion, constructing a human body model on the basis of constraints including the inherent future of each segment, the articulation of the body, and the range of the movement of each joint, and inputting the human body model into a database;

applying the actual motions of a human body to the model;

calculating the resulting motions of the model using inverse dynamics and calculating the center of gravity of each segment, the force and torque exerted on each joint, the center of gravity of the whole body, and the force and torque exerted on the center of gravity of the whole body;

choosing a plurality of basic motions from the database, and modifying physical parameters of the basic motions;

dividing the robot into a plurality of segments connected by joints and calculating the motions of each robot body segment when forces corresponding to the basic motions are applied to the robot body segments using dynamics while neglecting constraints on the articulation of the robot body and the range of movements of the robot body joints;

checking and modifying the physical constraints on the articulation of the robot body segments and the range of movements of the robot body joints; and

displaying the resulting motions of the robot body on a screen.

8. A robot programming method comprising:

dividing a human body into a plurality of segments connected by joints, each of the segments acting as a minimal unit of motion, constructing a human body model on the basis of constraints including the inherent future of each segment, the articulation of the body, and the range of the movement of each joint, and inputting the human body model into a database;

applying the actual motions of a human body to the model;

calculating the resulting motions of the model using inverse dynamics and calculating the center of gravity of each segment, the force and torque exerted on each joint, the center of gravity of the whole body, and the force and torque exerted on the center of gravity of the whole body;

choosing a plurality of basic motions from the database, and modifying physical parameters of the basic motions;

dividing the robot into a plurality of segments connected by joints and calculating the motions of each robot body segment when forces corresponding to the basic motions are applied to the robot body segments using dynamics while neglecting constraints on the articulation of the robot body and the range of movements of the robot body joints;

checking and modifying physical constraints on the articulation of the robot body and the range of movements of the robot body joints;

calculating the relation between force and the motions caused by the modification of physical constraints using inverse dynamics; and

displaying the results obtained by composing the motions calculated by dynamics and the forces and centers of gravity calculated by inverse dynamics

9. A method for developing a new sport motion comprising:

dividing a human body into a plurality of segments connected by joints, each of the segments acting as a minimal unit of motion, constructing a human body model on the basis of constraints including the inherent future of each segment, the articulation of the body, and the range of the movement of each joint, and inputting the human body model into a database;

applying the actual motions of a human body to the model;

calculating the resulting motions of the model using inverse dynamics and calculating the center of gravity of each segment, the force and torque exerted on each joint, the center of gravity of the whole body, and the force and torque exerted on the center of gravity of the whole body;

choosing a plurality of basic motions from the database, and modifying physical parameters of the basic motions;

calculating the motions of each segment when forces corresponding to the basic motions are applied to the segments using dynamics while neglecting constraints on the articulation of the human body and the range of movements of the joints;

checking and modifying the physical constraints on the articulation of the human body and the range of movements of the joints; and

displaying the resulting motions of the human model on a screen.

10. A method for developing a new training motion comprising:

dividing a human body into a plurality of segments connected by joints, each of the segments acting as a minimal unit of motion, constructing a human body model on the basis of constraints including the inherent future of each segment, the articulation of the body, and the range of the movement of each joint, and inputting the human body model into a database;

applying actual motions of a human body to the model;

calculating the resulting motions of the model using inverse dynamics and calculating the center of gravity of each segment, the force and torque exerted on each joint, the center of gravity of the whole body, and the force and torque exerted on the center of gravity of the whole body;

choosing a plurality of basic motions from the database, and modifying physical parameters of the basic motions;

calculating the motions of each segment when forces corresponding to the basic motions are applied to the segments using dynamics while neglecting constraints on the articulation of the human body and the range of movements of the joints;

checking and modifying physical constraints on the articulation of the human body and the range of movements of the joints;

calculating the relation between forces and the motions caused by the modification of physical constraints using inverse dynamics; and

displaying the result obtained by composing the motions calculated by dynamics and the forces and centers of gravity calculated by inverse dynamics.

11. A skill developing method comprising:

dividing a human body into a plurality of segments connected by joints, each of the segments acting as a minimal unit of motion, constructing a human body model on the basis of constraints including the inherent future of each segment, the articulation of the body, and the range of the movement of each joint, and inputting the human body model into a database;

applying the actual motions of a human body to the model;

calculating the resulting motions of the model using inverse dynamics and calculating the center of gravity of each segment, the force and torque exerted on each joint, the center of gravity of the whole body, and the force and torque exerted on the center of gravity of the whole body;

choosing a plurality of basic motions from the database, and modifying physical parameters of the basic motions;

calculating the motions of each segment when forces corresponding to the basic motions are applied to the segments using dynamics while neglecting constraints on the articulation of the human body and the range of movements of the joints;

checking and modifying the physical constraints on the articulation of the human body and the range of movements of the joints; and

displaying the resulting motions of the human model on a screen.

12. A skill developing method comprising:

dividing a human body into a plurality of segments connected by joints, each of the segments acting as a minimal unit of motion, constructing a human body model on the basis of constraints including the inherent future of each segment, the articulation of the body, and the range of the movement of each joint, and inputting the human body model into a database;

applying actual motions of a human body to the model;

calculating the resulting motions of the model using inverse dynamics and calculating the center of gravity of each segment, the force and torque exerted on each joint, the center of gravity of the whole body, and the force and torque exerted on the center of gravity of the whole body;

choosing a plurality of basic motions from the database, and modifying physical parameters of the basic motions;

calculating the motions of each segment when forces corresponding to the basic motions are applied to the segments using dynamics while neglecting constraints on the articulation of the human body and the range of movements of the joints;

checking and modifying physical constraints on the articulation of the human body and the range of movements of the joints;

calculating the relation between forces and the motions caused by the modification of physical constraints using inverse dynamics; and

displaying the result obtained by composing the motions calculated by dynamics and the forces and centers of gravity calculated by inverse dynamics.

Fig. 1

```
┌─────────────────────┐
│  CREATE MODEL OF    │
│  HUMAN/ANIMAL BODY  │
└─────────────────────┘
           │
           ▼
┌─────────────────────┐
│  APPLY MOVEMENTS    │
│   TO THE MODEL      │
└─────────────────────┘
           │
           ▼
┌─────────────────────┐
│  ANALYSE MOVEMENTS  │─────┐
└─────────────────────┘     │
           │                │
           ▼                │
┌─────────────────────┐     │
│     INPUT TO        │     │
│    DATABASE         │     │
└─────────────────────┘     │
           │                │
           ▼                │
┌─────────────────────┐     │
│   DESIGN NEW        │     │
│    MOTION           │     │
└─────────────────────┘     │
           │                │
           ▼                │
┌─────────────────────┐     │
│   APPLY DYNAMICS    │     │
└─────────────────────┘     │
           │                │
           ▼                │
┌─────────────────────┐     │
│  APPLY CONSTRAINTS  │     │
└─────────────────────┘     │
           │                │
           ▼                │
┌─────────────────────┐     │
│  APPLY INVERSE      │     │
│   DYNAMICS          │     │
└─────────────────────┘     │
           │                │
           ▼                │
┌─────────────────────┐     │
│   DISPLAY RESULT    │◄────┘
└─────────────────────┘
```

Fig. 2

Fig. 3

(a)

(b)

Fig. 4

(a)

(b)

Fig. 5

(a)  (b)

Fig. 6

(a)  (b)

Fig. 7

(a)

(b)

Fig. 8

(a)

(b)

26

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | IEEE COMPUTER GRAPHICS AND APPLICATIONS. vol. 7, no. 6, June 1987, NEW YORK US pages 12 - 27; WILHELMS: 'using dynamic analysis for realistic animation of articulated bodies' * the whole document * | 1-11 | G06F15/72 |
| A | IEEE COMPUTER GRAPHICS AND APPLICATIONS. vol. 7, no. 4, April 1987, NEW YORK US pages 11 - 22; WILHELMS: 'toward automation motion control' * page 14, column 2, line 31 - page 18, column 2, line 28 * | 1-11 | |
| A | INTERNATIONAL JOURNAL OF ROBOTICS RESEARCH vol. 8, no. 1, February 1989, CAMBRIDGE MA US pages 63 - 76; HASHIMOTO: 'a new parallel algorithm for inverse dynamics' * page 64, column 2, line 1 - line 15 * | 1-11 | |

TECHNICAL FIELDS
SEARCHED (Int. Cl.5)

G06F
B25J

The present search report has been drawn up for all claims

| Place of search | Date of completion of the search | Examiner |
|---|---|---|
| THE HAGUE | 20 FEBRUARY 1992 | GUINGALE A. |

EPO FORM 1503 03.82 (P0401)